# EUROPEAN PATENT APPLICATION

(11) **EP 2 144 298 A2**
(43) Date of publication of application: **13.01.2010**
(21) Application number: 09380109.0
(22) Date of filing: 25.05.2009
(51) Int. Cl.: H01L 31/04, H01L 31/052, H02N 6/00

(54) **Autonomous system of photovoltaic energy production**

(30) Priority: 11.07.2008 ES 200802074
(71) Applicant: Baquero Menéndez, Manuel José, 33557 Ponga Asturias (ES)
(72) Inventor: Baquero Menéndez, Manuel José, 33557 Ponga Asturias (ES)
(74) Representative: Carvajal y Urquijo, Isabel

(57) **Abstract**

Autonomous system of photovoltaic energy production comprising, at least a box (1), whose sides or walls are photovoltaic panels themselves (11) oriented towards the inside of the box (1), with a reflecting lid (13) on the lower part of the assembly and another one on the upper part (12); a plurality of lamps (14), introduced in the inside of the box (1); and a plurality of direct-current batteries (2), connected to the photovoltaic panels (11) of the box (1) and to the plurality of lamps (14); where these elements are arranged in such a manner that said lamps (14) excite the photovoltaic panels (11) whose production is stored by the batteries (2), which in turn feed the lamps (14).

## Description

### OBJECT OF THE INVENTION

The object of the present invention is an autonomous system of photovoltaic energy production based on a box whose walls are photovoltaic panels with a reflecting lid on the lower part and another reflecting lid on the upper part.

### BACKGROUND OF THE INVENTION

The applicant, who is an expert on the subject, does not know of any system of photovoltaic energy production with the characteristics described below.

### DESCRIPTION OF THE INVENTION

The autonomous system of photovoltaic energy production, object of the present invention, comprises, at least, a box, whose sides or walls are photovoltaic panels oriented towards the inside of the box, which, logically, can vary in number and shape, with a reflecting lid on the lower part of the assembly and another one on the upper part.

Said lower part has an inclination of approximately 97°, while the upper part can have several positions, always considering that the larger the lid, the more inclination it must have to take advantage of the maximum refraction possible.

The lower lid comprises in its central area a ventilation cut. Said cut also serves for inserting a plurality of lamps fed by a set of batteries connected to a transformer, which, on the one hand, receive the charge from the panels and on the other, feed the lamps which lighten the inside of the box, exciting the photovoltaic panels.

Thanks to the system thus described, it is possible to attain 600 kW/hour with a box with an inner surface of 700m².

### BRIEF DESCRIPTION OF THE DRAWINGS

The following is a brief description of a series of drawings which will help understand the invention better, and which clearly relate to an embodiment of said invention which is presented as a non-limiting example thereof.

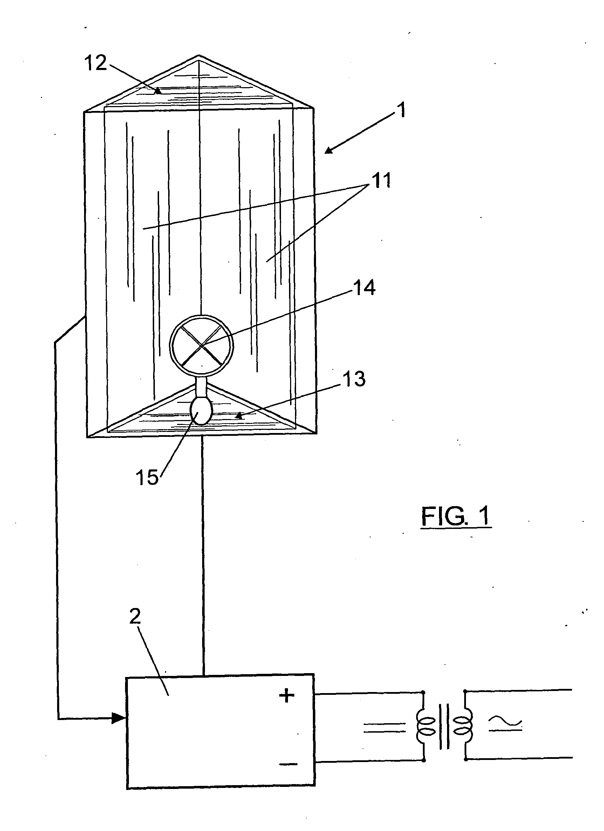

FIGURE 1.- It shows a schematic view of the system object of the present invention patent.

### PREFERRED EMBODIMENT OF THE INVENTION

As it can be seen in the attached drawing, the autonomous system of photovoltaic energy production comprises, at least:
a box (1), whose sides or walls are photovoltaic panels themselves (11) oriented towards the inside of the box (1), with a reflecting lid (13) on the lower part of the assembly and another reflecting lid (12) on the upper part;
a plurality of lamps (14), introduced in the inside of the box (1);
a plurality of direct-current batteries (2) connected to the photovoltaic panels (11) of
the box (1) and to the plurality of lamps (14);
where these elements are arranged in such a way that said lamps (14) excite the photovoltaic panels (11) whose production is stored by the batteries (2), which in turn feed the lamps (14).

The lower part of the box (1) has an inclination of approximately 97°, while the upper part of the box (1) can have several positions, always considering that the larger the lid (12), the more inclination it must have to take advantage of the maximum refraction possible.

The lower lid (13) comprises in its central area a ventilation cut (15). Said cut also serves for inserting a plurality of lamps (14).

## Claims

1. Autonomous system of photovoltaic energy production **characterized in that** it comprises, at least:
a box (1), whose sides or walls are photovoltaic panels themselves (11) oriented towards the inside of the box (1), with a reflecting lid (13) on the lower part of the assembly and another one on the upper part (12);
a plurality of lamps (14), introduced in the inside of the box (1); and
a plurality of direct-current batteries (2), connected to the photovoltaic panels (11)
of the box (1) and to the plurality of lamps (14);
being these elements arranged in such a manner that said lamps (14) excite the photovoltaic panels (11), whose production is stored by the batteries (2), which in turn feed the lamps (14).

2. System according to claim 1, **characterized in that** the lower part of the box (1) has an inclination of approximately 97°.

3. System according to claims 1 and 2, **characterized in that** the upper part of the box can have several positions, always considering that the larger the lid (12), the more inclination it must have to take advantage of the maximum possible refraction.

4. System according to claims 1 to 3, **characterized in that** the lower lid (13) comprises in its central area a ventilation cut (15), which also serves for inserting a plurality of lamps (14).
